# EUROPEAN PATENT APPLICATION

(11) **EP 4 442 786 A1**
(43) Date of publication of application: **09.10.2024**
(21) Application number: 22901061.6
(22) Date of filing: 14.11.2022
(51) Int. Cl.: C09J 201/10, B60C 19/00, C09J 11/06, C09J 133/04, C09J 163/00, C09J 163/02, C09J 171/02

(54) **ADHESIVE COMPOSITION FOR VULCANIZED RUBBER, AND TIRE**

(30) Priority: 03.12.2021 JP 2021197001
(71) Applicant: The Yokohama Rubber Co., Ltd., Hiratsuka-shi, Kanagawa 254-8601 (JP)
(72) Inventor: OKAMATSU Takahiro, Hiratsuka-shi, Kanagawa 254-8601 (JP); AKIYAMA Hisae, Hiratsuka-shi, Kanagawa 254-8601 (JP)
(74) Representative: Grünecker Patent- und Rechtsanwälte PartG mbB
(86) International application number: PCT/JP2022/042200
(87) International publication number: WO 2023/100628

(57) **Abstract**

An object of the present invention is to provide an adhesive composition for vulcanized rubber excellent in adhesiveness. The present invention relates to an adhesive composition for vulcanized rubber, which contains an organic polymer having an alkoxysilyl group, an epoxy resin having an aromatic hydrocarbon group, and a silane coupling agent. A mass ratio (R:E) between a content R of the organic polymer and a content E of the epoxy resin is from 95:5 to 50:50, and a content S of the silane coupling agent is from 1.5 to 10 parts by mass per 100 parts by mass of a total of the content R and the content E, and a tire includes a vulcanized tire and a part bonded to each other with the adhesive composition for vulcanized rubber.

## Description

### Technical Field

The present invention relates to an adhesive composition for vulcanized rubber and a tire.

### Background Art

In the related art, there is a system that monitors information (e.g., air pressure) of tires mounted on an automobile by utilizing the Internet of things (IoT). The system includes a container for housing a device such as a sensor (detector) in the inner portion of a tire to monitor the information of the tire. Typically, the container is fixed to a tire (e.g., innerliner) by an adhesive (for example, Patent Document 1).

### Citation List

### Patent Document

Patent Document 1: JP 2020-514148 T

### Summary of Invention

### Technical Problem

The present inventors have prepared an adhesive composition with reference to Patent Document 1, applied the adhesive composition on the surface of the vulcanized innerliner to bond a part (e.g., a rubber container for accommodating a sensor), and found that the adhesiveness between the adhesive composition and the vulcanized rubber (the innerliner and/or the container) was not necessarily sufficient.

Thus, in view of the above circumstances, an object of the present invention is to provide an adhesive composition for vulcanized rubber having excellent adhesiveness.

Another object of the present invention is to provide a tire to which a part is bonded.

### Solution to Problem

As a result of diligent research to solve the issues described above, the present inventors have found that a desired effect can be achieved by allowing an adhesive composition to contain, as an epoxy compound, an epoxy resin having an aromatic hydrocarbon group, and thus completed the present invention.

An embodiment of the present invention is based on the findings described above, and specifically solves the problems described above by the following configurations.

[1] An adhesive composition for vulcanized rubber, containing:
   an organic polymer having an alkoxysilyl group;
   an epoxy resin having an aromatic hydrocarbon group; and
   a silane coupling agent;
   a mass ratio (R:E) between a content R of the organic polymer and a content E of the epoxy resin being from 95:5 to 50:50, and
   a content S of the silane coupling agent being from 1.5 to 10 parts by mass per 100 parts by mass of a total of the content R and the content E.
[2] The adhesive composition for vulcanized rubber according to [1], wherein a cured product has a tensile elastic modulus of from 1.0 × 10⁵ to 900 × 10⁵ Pa under a condition of 25°C.
[3] The adhesive composition for vulcanized rubber according to [1] or [2], wherein the epoxy resin contains a bisphenol A type epoxy resin and/or a bisphenol F type epoxy resin.
[4] The adhesive composition for vulcanized rubber according to any of [1] to [3], further containing an organotin catalyst.
[5] The adhesive composition for vulcanized rubber according to any of [1] to [4], further containing water.
[6] The adhesive composition for vulcanized rubber according to any of [1] to [5], further containing a tertiary amine.
[7] The adhesive composition for vulcanized rubber according to any of [1] to [6], further containing a filler, a content F of the filler being from 10 to 120 parts by mass per 100 parts by mass of the total of the content R and the content E.
[8] The adhesive composition for vulcanized rubber according to any of [1] to [7], wherein a main backbone of the organic polymer has a repeating unit derived from a (meth)acrylate-based monomer and/or an alkylene oxide unit.
[9] A one-part type adhesive composition for vulcanized rubber, containing: an organic polymer having an alkoxysilyl group; an epoxy resin having an aromatic hydrocarbon group; a silane coupling agent; and an organotin catalyst;
   a mass ratio (R1:E1) between a content R1 of the organic polymer and a content E1 of the epoxy resin being from 95:5 to 50:50, and
   a content S1 of the silane coupling agent being from 3.0 to 10 parts by mass per 100 parts by mass of a total of the content R1 and the content E1.
[10] A two-part type adhesive composition for vulcanized rubber, being a two-part type containing an agent A and an agent B,
   the agent A containing: an organic polymer having an alkoxysilyl group; a tertiary amine; and a silane coupling agent,
   the agent B containing: an epoxy resin having an aromatic hydrocarbon group; an organotin catalyst; and water,
   a mass ratio (R2:E2) between a content R2 of the organic polymer and a content E2 of the epoxy resin being from 95:5 to 50:50, and
   a content S2 of the silane coupling agent being from 1.5 to 3.5 parts by mass per 100 parts by mass of a total of the content R2 and the content E2.
[11] A tire including a vulcanized tire and a part, the vulcanized tire and the part being bonded to each other with an adhesive composition for vulcanized rubber according to any of [1] to [10].
[12] The tire according to [11], wherein the part is a rubber container containing a sensor.

### Advantageous Effects of Invention

The present invention can provide an adhesive composition for vulcanized rubber having excellent adhesiveness.

The present invention can also provide a tire to which a part is bonded.

### Description of Embodiments

Embodiments of the present invention will be described in detail below.

Note that, in the present specification, (meth)acrylate represents acrylate or methacrylate, and (meth)acryl represents acryl or methacryl.

Additionally, in the present specification, the value range indicated by using "from ... to ..." means the range including the former value as a lower limit value and the later value as an upper limit value.

In the present specification, unless otherwise indicated, a substance corresponding to each component can be used alone or two or more types of substances can be used in combination. In a case where a component includes two or more types of substances, content of component means the total content of the two or more types of substances.

In the present specification, the production method of each component is not particularly limited unless otherwise noted. Examples of the method include a known method.

In the present specification, the cases where adhesiveness is superior may be referred to as "the superior effect of the present invention is exhibited".

### [Adhesive Composition for Vulcanized Rubber]

An adhesive composition for vulcanized rubber according to an embodiment of the present invention (adhesive composition according to an embodiment of the present invention) is an adhesive composition for vulcanized rubber, containing:
an organic polymer having an alkoxysilyl group;
an epoxy resin having an aromatic hydrocarbon group; and
a silane coupling agent, in which
a mass ratio (R:E) between a content R of the organic polymer and a content E of the epoxy resin is from 95:5 to 50:50, and
a content S of the silane coupling agent is from 1.5 to 10 parts by mass per 100 parts by mass of a total of the content R and the content E.

Each component contained in the adhesive composition according to an embodiment of the present invention will be described in detail below.

### [Organic Polymer]

The adhesive composition of an embodiment of the present invention contains an organic polymer having an alkoxysilyl group. The organic polymer is an organic polymer having an alkoxysilyl group.

### [Alkoxysilyl Group]

In an embodiment of the present invention, the organic polymer has an alkoxysilyl group.

The alkoxysilyl group is a group in which an alkoxy group is bonded to silicon.

The number of alkoxy groups bonded to one silicon atom is from 1 to 3. The number of alkoxy groups bonded to one silicon atom is preferably from 2 to 3 from the viewpoint that the superior effect of the present invention is exhibited, and the tensile elastic modulus of the resulting cured product can fall within an appropriate range.

In a case where the number of alkoxy groups bonded to one silicon atom is from 1 to 2, a remaining group that is bonded to the silicon atom is not particularly limited. Examples thereof include a hydrocarbon group.

Examples of the alkoxysilyl group include a methoxysilyl group (which may be any of monomethoxy, dimethoxy and trimethoxy. The same applies to the following various alkoxysilyl groups), an ethoxysilyl group, and a propoxysilyl group.

### (Main Backbone)

In a preferred aspect, the organic polymer has an alkoxysilyl group and the main backbone is an organic polymer.

Examples of the main backbone of the organic polymer include vinyl-based polymers and polyoxyalkylene-based polymers.

The main backbone of the organic polymer may be, for example, either a homopolymer or a copolymer. The main backbone of the organic polymer may be, for example, any one of a block polymer, a random polymer, and a polymer having a taper.

The vinyl-based monomer that can constitute the main backbone of the organic polymer is not particularly limited as long as it is a monomer having a double bond. Examples thereof include (meth)acrylic acid; (meth)acrylatebased monomers such as methyl (meth)acrylate, ethyl (meth)acrylate, propyl (meth)acrylate, butyl (meth)acrylate, hexyl (meth)acrylate, decyl (meth)acrylate, phenyl (meth)acrylate, 2-methoxyethyl (meth)acrylate, 3-methoxypropyl (meth)acrylate, and 2-hydroxyethyl (meth)acrylate; and styrene-based monomers such as styrene, vinyltoluene, and α-methylstyrene.

The alkylene oxide unit that can constitute the main backbone of the organic polymer is not particularly limited. Examples thereof include an ethylene oxide unit and a propylene oxide unit.

The main backbone of the organic polymer preferably has a repeating unit derived from a (meth)acrylate-based monomer and/or an alkylene oxide unit from the viewpoint that the superior effect of the present invention is exhibited, and the tensile elastic modulus of the resulting cured product can fall within an appropriate range.

### (Bonding Position of Alkoxysilyl Group)

In the organic polymer, the alkoxysilyl group can be bonded to a terminal and/or a side chain of the organic polymer. In a preferred aspect, the alkoxysilyl group is bonded to the terminal of the organic polymer.

The alkoxysilyl group may be directly bonded to the main backbone or bonded via a linking group of the organic polymer. The linking group is not particularly limited.

### (Number of Alkoxysilyl Groups)

The organic polymer preferably has from 2 to 4 alkoxysilyl groups on average in one molecule from the viewpoint that the superior effect of the present invention is exhibited, and the tensile elastic modulus of the resulting cured product can be in an appropriate range.

### [Epoxy Resin]

The adhesive composition of an embodiment of the present invention contains an epoxy resin having an aromatic hydrocarbon group. The epoxy resin is a compound having an aromatic hydrocarbon group and a plurality of epoxy groups.

### [Aromatic Hydrocarbon Group]

The aromatic hydrocarbon group included in the epoxy resin is not particularly limited. Examples thereof include a benzene ring.

### [Epoxy Group]

The epoxy resin has a plurality of epoxy groups in one molecule.

The epoxy resin preferably has 2 to 3 epoxy groups in one molecule.

In the epoxy resin, the aromatic hydrocarbon group and the epoxy group can be bonded directly or via a linking group. The linking group is not particularly limited.

### (Specific Example)

Examples of the epoxy resin include bisphenol polyglycidyl ether type epoxy resins such as a bisphenol A type epoxy resin, a bisphenol B type epoxy resin, a bisphenol C type epoxy resin, a bisphenol E type epoxy resin, a bisphenol F type epoxy resin, a bisphenol AD type epoxy resin, and a bisphenol S type epoxy resin; hydrogenated bisphenol diglycidyl ether (e.g., hydrogenated bisphenol A type epoxy resin); novolac type epoxy compounds such as a phenol novolac type epoxy resin, a biphenyl novolac type epoxy compound, a cresol novolac type epoxy compound, and a bisphenol A novolac type epoxy compound; a naphthalene type epoxy resin; and a biphenyl type epoxy resin.

The epoxy resin preferably contains a bisphenol A type epoxy resin and/or a bisphenol F type epoxy resin, and more preferably contains a bisphenol A type epoxy resin, from the viewpoint that the superior effect of the present invention is exhibited, and the tensile elastic modulus of the resulting cured product can be in an appropriate range.

Note that the epoxy resin contains no silane coupling agent having an epoxy group as a functional group.

### (Weight Average Molecular Weight)

The weight average molecular weight of the epoxy resin is preferably 200 or more and less than 700 from the viewpoint that the superior effect of the present invention is exhibited, and the tensile elastic modulus of the resulting cured product can be in an appropriate range.

The weight average molecular weight of the epoxy resin can be measured by gel permeation chromatography calibrated with polystyrene standards using tetrahydrofuran (THF) as a solvent.

### [Mass Ratio (R:E)]

In an embodiment of the present invention, a mass ratio (R:E) between a content R of the organic polymer and a content E of the epoxy resin is from 95:5 to 50:50.

By setting the mass ratio (R:E) to the range described above, the effects of the present invention are excellent.

The mass ratio (R:E) is preferably from 95:5 to 60:40 and more preferably from 95:5 to 85:20 from the viewpoint that the superior effect of the present invention is exhibited, and the tensile elastic modulus of the resulting cured product can be in an appropriate range.

### [Silane Coupling Agent]

The adhesive composition according to an embodiment of the present invention contains a silane coupling agent.

The silane coupling agent is not particularly limited as long as the silane coupling agent is a compound having a functional group and a hydrolyzable silyl group. For example, known ones can be used.

The hydrolyzable silyl group contained in the silane coupling agent can react with the organic polymer described above.

### (Functional Group)

Examples of the functional group contained in the silane coupling agent include an amino group, a mercapto group, an epoxy group, a carboxyl group, a vinyl group, an isocyanate group, isocyanurate, and a halogen. In one of the preferred embodiments, the functional group contains no hydrolyzable silyl group.

In a case where the functional group is capable of reacting with an epoxy group (e.g., an amino group, a mercapto group, an epoxy group, a carboxyl group, or a vinyl group), the silane coupling agent having a functional group capable of reacting with an epoxy group can react with the epoxy resin described above. In a case where the silane coupling agent has a functional group capable of reacting with an epoxy group, the silane coupling agent as described above is preferable from the viewpoint that the organic polymer and the epoxy resin can be linked in the resulting cured product, the superior effect of the present invention is exhibited, and the tensile elastic modulus of the resulting cured product can be in an appropriate range.

### (Hydrolyzable Silyl Group)

Examples of the hydrolyzable silyl group contained in the silane coupling agent include an alkoxysilyl group. The alkoxysilyl group can be, for example, the same as the alkoxysilyl group contained in the organic polymer.

In the silane coupling agent, the functional group and the hydrolyzable silyl group can be bonded through a linking group. The linking group is not particularly limited.

### (Specific Example)

Examples of the silane coupling agent include an isocyanate group-containing silane coupling agent such as γ-isocyanatepropyltrimethoxysilane;
amino group-containing silane coupling agents such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, N-vinylbenzyl-γ-aminopropyltriethoxysilane;
mercapto group-containing silane coupling agents such as γ-mercaptopropyltrimethoxysilane;
epoxy group-containing silane coupling agents such as γ-glycidoxypropyltrimethoxysilane; and
carboxy group-containing silane coupling agents such as β-carboxyethyltriethoxysilane.

### (Ketimine-Based Silane Coupling Agent)

For example, a latent silane coupling agent can be used for the silane coupling agent.

A latent silane coupling agent generally refers to a compound in which a functional group that the above-described silane coupling agent has, is protected by a protective group, and when, for example, water removes the protective group from the functional group, it can cause a silane coupling agent to generate.

Examples of the latent silane coupling agent include a ketimine-based silane coupling agent.

Examples of the ketimine-based silane coupling agent include a compound obtained by a reaction between the above-described amino group-containing silane coupling agent and a ketone compound such as methyl isobutyl ketone.

The silane coupling agent preferably includes an amino group-containing silane coupling agent or a ketimine-based silane coupling agent, and more preferably includes 3-aminopropyltrimethoxysilane or 3-triethoxysilyl-N-(1,3-dimethyl-butylidene)propylamine, from the viewpoint that the superior effect of the present invention is exhibited, and the tensile elastic modulus of the resulting cured product can be in an appropriate range.

### [Content S of Silane Coupling Agent]

In an embodiment of the present invention, a content S of the silane coupling agent is from 1.5 to 10 parts by mass per 100 parts by mass of the total of the content R of the organic polymer and the content E of the epoxy resin.

Setting the content S to the range described above makes the effects of the present invention excellent.

The content S is preferably from 2.0 to 9.0 parts by mass per 100 parts by mass of the total of the content R and the content E from the viewpoint that the superior effect of the present invention is exhibited, and the tensile elastic modulus of the resulting cured product can be in an appropriate range.

### (Organotin Catalyst)

The adhesive composition according to an embodiment of the present invention preferably further contains an organotin catalyst from the viewpoint that the superior effect of the present invention is exhibited, and the tensile elastic modulus of the resulting cured product can be in an appropriate range.

The organotin catalyst can promote the reactivity of a hydrolyzable silyl group.

### · Specific Example

Examples of the organotin catalyst include tetravalent tin compounds such as dialkyltin dicarboxylates, dialkyltin alkoxides, intramolecularly coordinating derivatives of dialkyltin, reaction products of dialkyltin oxide and ester compounds, and reaction products of dialkyltin oxide and silicate compounds; and divalent tin compounds.

Among them, the organotin catalyst preferably contains dialkyltin dicarboxylates, and more preferably contains dibutyltin dilaurate, from the viewpoint that the superior effect of the present invention is exhibited, and the tensile elastic modulus of the resulting cured product can be in an appropriate range.

### · Content

The content of the organotin catalyst is preferably from 0.05 to 2.0 parts by mass per 100 parts by mass of the total of the content R of the organic polymer and the content E of the epoxy resin from the viewpoint that the superior effect of the present invention is exhibited, and the tensile elastic modulus of the resulting cured product can be in an appropriate range.

### (Water)

The adhesive composition according to an embodiment of the present invention preferably further contains water from the viewpoint that the superior effect of the present invention is exhibited, and the tensile elastic modulus of the resulting cured product can be in an appropriate range.

Water can promote the reactivity of the hydrolyzable silyl group.

Water is not particularly limited. Examples of water include tap water and distilled water.

### · Content

The content of water is preferably from 0.1 to 1.0 part by mass per 100 parts by mass of the total of the content R of the organic polymer and the content E of the epoxy resin from the viewpoint that the superior effect of the present invention is exhibited, and the tensile elastic modulus of the resulting cured product can be in an appropriate range.

### (Tertiary Amine)

The adhesive composition according to an embodiment of the present invention preferably further contains a tertiary amine from the viewpoint that the superior effect of the present invention is exhibited, and the tensile elastic modulus of the resulting cured product can be in an appropriate range.

The tertiary amine can function as a curing agent for the epoxy resin described above.

The tertiary amine is a compound having a nitrogen atom (tertiary amino group) to which three hydrocarbon groups are bonded. The hydrocarbon group is not particularly limited. Examples thereof include an aliphatic hydrocarbon group, an aromatic hydrocarbon group, and combinations thereof. The aliphatic hydrocarbon group and the aromatic hydrocarbon group are not particularly limited.

The tertiary amine preferably has two or more nitrogen atoms constituting a tertiary amino group, and more preferably has three nitrogen atoms.

The tertiary amine may additionally have an OH group.

### · Specific Example

Examples of the tertiary amine include a linear tertiary diamine (not including an aromatic hydrocarbon) represented by (CH₃)₂N(CH₂)ₙN(CH₃)₂, where n is an integer of from 1 to 10;
an alkyl tertiary monoamine (not including an aromatic hydrocarbon) represented by (CH₃)₂-N(CH₂)ₙ-CH₃, where n is an integer of from 0 to 10, N{(CH₂}ₙ CH₃}₃, where n is an integer of from 1 to 10; and
aliphatic aromatic amines such as benzyldimethylamine, 2-(dimethylaminomethyl)phenol, and 2,4,6-tris(dimethylaminomethyl)phenol.

The tertiary amine preferably contains aliphatic aromatic amines, more preferably contains tris(dialkylaminoalkyl)phenol, and still more preferably contains 2,4,6-tris(dimethylaminomethyl)phenol, from the viewpoint that the superior effect of the present invention is exhibited, and the tensile elastic modulus of the resulting cured product can be in an appropriate range.

The aliphatic aromatic amines as the tertiary amine can have an aliphatic hydrocarbon group, an aromatic hydrocarbon group, or a combination thereof as the hydrocarbon group. The aliphatic hydrocarbon group and the aromatic hydrocarbon group are not particularly limited.

The aliphatic aromatic amines preferably have two or more nitrogen atoms constituting a tertiary amino group, and more preferably three nitrogen atoms.

The aliphatic aromatic amines may additionally contain an OH group.

### · Content

The content of the tertiary amine is preferably from 0.5 to 5.0 parts by mass per 100 parts by mass of the total of the content R of the organic polymer and the content E of the epoxy resin from the viewpoint that the superior effect of the present invention is exhibited, and the tensile elastic modulus of the resulting cured product can be in an appropriate range.

### (Filler)

The adhesive composition according to an embodiment of the present invention preferably further contains a filler from the viewpoint that the superior effect of the present invention is exhibited, and the tensile elastic modulus of the resulting cured product can be in an appropriate range.

Examples of the filler include carbon black, silica, mica, calcium carbonate, magnesium carbonate, diatomaceous earth, clay, talc, titanium oxide, and ferric oxide.

The filler may be, for example, a filler which has undergone surface treatment by a surface treating agent, such as a fatty acid or a fatty acid ester.

The filler preferably contains calcium carbonate from the viewpoint that the superior effect of the present invention is exhibited, and the tensile elastic modulus of the resulting cured product can be in an appropriate range.

### · Content

The content F of the filler is preferably from 10 to 120 parts by mass per 100 parts by mass of the total of the content R of the organic polymer and the content E of the epoxy resin from the viewpoint that the superior effect of the present invention is exhibited, and the tensile elastic modulus of the resulting cured product can be in an appropriate range.

### (Optional Component)

The adhesive composition according to an embodiment of the present invention may further contain components (optional components) other than the components described above. Examples of the optional component include a plasticizer, a balloon (hollow body), an anti-aging agent, an antioxidant, a solvent, and a thixotropic agent.

### (Form)

The adhesive composition according to an embodiment of the present invention can be formed into a one-part type or a two-part type.

### (One-Part Type Adhesive Composition for Vulcanized Rubber)

In a preferred aspect, in a case where the adhesive composition of an embodiment of the present invention is a one-part type,
a one-part type adhesive composition for vulcanized rubber contains an organic polymer having an alkoxysilyl group, an epoxy resin having an aromatic hydrocarbon group, a silane coupling agent, and an organotin catalyst,
a mass ratio (R1:E1) between a content R1 of the organic polymer and a content E1 of the epoxy resin is from 95:5 to 50:50, and
a content S1 of the silane coupling agent is from 3.0 to 10 parts by mass per 100 parts by mass of a total of the content R1 and the content E1.

The organic polymer having an alkoxysilyl group, the epoxy resin having an aromatic hydrocarbon group, the silane coupling agent, and the organotin catalyst are the same as those described above. The content R1 corresponds to the content R, the content E1 corresponds to the content E, and the content S1 corresponds to the content S.

### · Silane Coupling Agent

In a case where the adhesive composition of an embodiment of the present invention is a one-part type, the silane coupling agent preferably contains a latent silane coupling agent.

In a case where the adhesive composition of an embodiment of the present invention is a one-part type, the content S1 of the silane coupling agent is preferably from 5.0 to 10 parts by mass per 100 parts by mass of the total of the content R1 and the content E1 from the viewpoint that the superior effect of the present invention is exhibited, and the tensile elastic modulus of the resulting cured product can be in an appropriate range.

### · Content of organotin catalyst

In a case where the adhesive composition of an embodiment of the present invention is a one-part type, the content of the organotin catalyst is preferably from 0.05 to 0.5 parts by mass per 100 parts by mass of the total of the content R1 of the organic polymer and the content E1 of the epoxy resins from the viewpoint that the superior effect of the present invention is exhibited, and the tensile elastic modulus of the resulting cured product can be in an appropriate range.

### (Two-Part Type Adhesive Composition for Vulcanized Rubber)

In a case where the adhesive composition of an embodiment of the present invention is a two-part type containing an agent A and an agent B, a preferred aspect includes a two-part type adhesive composition for vulcanized rubber where the agent A contains an organic polymer having an alkoxysilyl group, a tertiary amine, and a silane coupling agent,
the agent B contains an epoxy resin having an aromatic hydrocarbon group, an organotin catalyst, and water,
a mass ratio (R2:E2) between a content R2 of the organic polymer and a content E2 of the epoxy resin is from 95:5 to 50:50, and
a content S2 of the silane coupling agent is from 1.5 to 3.5 parts by mass per 100 parts by mass of a total of the content R2 and the content E2.

The organic polymer having an alkoxysilyl group, the tertiary amine, the silane coupling agent, the epoxy resin having an aromatic hydrocarbon group, the organotin catalyst, and water are the same as those described above. The content R2 corresponds to the content R, the content E2 corresponds to the content E, and the content S2 corresponds to the content S.

### · Silane Coupling Agent

In a case where the adhesive composition of an embodiment of the present invention is a two-part type, the silane coupling agent may be a silane coupling agent other than a latent silane coupling agent.

In a case where the adhesive composition of an embodiment of the present invention is a two-part type, the content S2 of the silane coupling agent is preferably from 2.0 to 3.0 parts by mass per 100 parts by mass of the total of the content R2 and the content E2 from the viewpoint that the superior effect of the present invention is exhibited, and the tensile elastic modulus of the resulting cured product can be in an appropriate range.

### · Content of organotin catalyst

In a case where the adhesive composition of an embodiment of the present invention is a two-part type, the content of the organotin catalyst is preferably from 0.05 to 2.0 parts by mass per 100 parts by mass of the total of the content R2 of the organic polymer and the content E2 of the epoxy resins from the viewpoint that the superior effect of the present invention is exhibited, and the tensile elastic modulus of the resulting cured product can be in an appropriate range.

### [Production Method]

The production method for the adhesive composition according to an embodiment of the present invention is not particularly limited. For example, in the case of a one-part type, examples of the production method include a method in which the respective components described above are mixed. In the case of a two-part type, examples of the production method include a method in which the components described above are mixed for each of the agents A and B.

Note that in the case of the two-part type, the agents A and B can be mixed at the time of use.

### [Application]

The adhesive composition according to an embodiment of the present invention is useful as an adhesive for fixing another material (e.g., a rubber container for housing a device) to vulcanized rubber (e.g., a tire (particularly an innerliner)).

### [Usage]

The adhesive composition according to an embodiment of the present invention can be cured under conditions of, for example, from 5 to 40°C. When the adhesive composition according to an embodiment of the present invention is cured, the adhesive composition according to an embodiment of the present invention does not have to be heated.

As a method for using the adhesive composition according to an embodiment of the present invention, the adhesive composition according to an embodiment of the present invention is applied to a vulcanized rubber and/or another material to bond the vulcanized rubber and the other material to each other, and they are left under the condition of room temperature (for example, from 5 to 40°C), whereby the adhesive composition according to an embodiment of the present invention can be cured to bond the vulcanized rubber and the other material to each other.

The tensile elastic modulus of the cured product obtained by curing the adhesive composition of an embodiment of the present invention under a condition of 25°C is preferably from 1.0 × 10⁵ to 900 × 10⁵ Pa from the viewpoint that the superior effect of the present invention is exhibited, and the tensile elastic modulus of the resulting cured product can be in an appropriate range. In a case where the tensile elastic modulus is in the above range, the strain (deformation) of the cured product with respect to stress (for example, stress due to rotation of a tire) can be further increased, and thus it is considered that the superior effect of the present invention is exhibited even in an environment in which stress is applied.

### [Tire]

The tire according to an embodiment of the present invention is a tire in which a vulcanized tire and a part are bonded to each other with the adhesive composition for vulcanized rubber according to an embodiment of the present invention.

### [Vulcanized Tire]

The vulcanized tire to be used in the tire of an embodiment of the present invention is not particularly limited as long as it is a tire after vulcanization (vulcanized).

### [Adhesive Composition]

The adhesive composition to be used in the tire of an embodiment of the present invention is not particularly limited as long as it is the adhesive composition for vulcanized rubber of an embodiment of the present invention.

### [Part]

Examples of a part to be used in the tire according to an embodiment of the present invention include a rubber container containing a sensor.

### (Container)

The (exterior of the) container is made of rubber. The rubber forming the container is preferably vulcanized.

The rubber that forms the container is not particularly limited. The rubber forming the container preferably contains natural rubber as a rubber component.

### (Sensor)

The sensor to be contained in the container is not particularly limited. Examples of the sensor include a sensor for acquiring information such as a tire air pressure, a tire wear condition, and road surface conditions.

In a preferable aspect, the container is bonded onto, for example, an innerliner of the tire.

### Example

An embodiment of the present invention will be described below in detail by way of examples. However, an embodiment of the present invention is not limited to such examples.

### [Production of Adhesive Composition]

### [Two-Part Type Adhesive Composition]

For each of the agents A and B presented in Table 1, two-part type adhesive compositions (agents A and B) were produced by mixing the components according to the proportions (parts by mass) presented in the table.

When each of the two-part type adhesive compositions was used, the agent A and the agent B were mixed.

### [One-Part Type Adhesive Composition]

The components presented in Table 2 were used in the proportions (part by mass) presented in the table and mixed by an agitator to produce one-part type adhesive compositions.

### [Evaluation]

The following evaluations were performed by using the adhesive compositions produced as described above. The results are presented in each

Table.

### [Adhesiveness]

The following evaluation of adhesiveness (adhesiveness for vulcanized rubber) was performed by using the adhesive compositions produced as described above.

For the evaluation of adhesiveness for vulcanized rubber, vulcanized rubbers 1 and 2 were first prepared as follows.

### · Preparation of vulcanized rubber 1

From the components presented in the following "Rubber composition for vulcanized rubber 1", the components other than sulfur and the vulcanization accelerator were kneaded with a 1.8 L sealed mixer for 5 minutes and released to form a master batch. The sulfur and the vulcanization accelerator were added to the obtained master batch and kneaded with an open roll to prepare a rubber composition for vulcanized rubber 1.

The rubber composition for vulcanized rubber 1 prepared as described above was vulcanized at 170°C for 10 minutes in a mold having a predetermined shape to produce vulcanized rubber 1 (width: 25 mm, width: 10 cm, thickness: 2 mm).

### ((Rubber Composition for Vulcanized Rubber 1))

· Halogenated butyl rubber 100 parts by mass (brominated isobutylene isoprene rubber, available from ExxonMobil Chemical)
· Carbon black 25 parts by mass (Niteron #GN, available from Shinnikka Carbon Co. Ltd.; N₂SA of 35 m²/g
· Zinc oxide (Zinc Oxide III, available from Seido Chemical Industry Co., Ltd.): 3 parts by mass
· Sulfur (SULFAX 5, available from Tsurumi Chemical Industry Co., Ltd.): 3 parts by mass
· Vulcanization accelerator (DM-PO, available from OUCHI SHINKO CHEMICAL INDUSTRIAL CO., LTD.): 2 parts by mass

### · Preparation of vulcanized rubber 2

From the components presented in the following "Rubber composition for vulcanized rubber 2", the components other than sulfur and the vulcanization accelerator were kneaded with a 1.8 L sealed mixer for 5 minutes and released to form a master batch. The sulfur and the vulcanization accelerator were added to the obtained master batch and kneaded with an open roll to prepare a rubber composition for vulcanized rubber 2.

The rubber composition for vulcanized rubber 2 prepared as described above was vulcanized at 170°C for 10 minutes in a mold having a predetermined shape to prepare vulcanized rubber 2 (width: 25 mm, length: 10 cm, thickness: 2 mm).

### ((Rubber Composition for Vulcanized Rubber 2))

· Natural rubber 100 parts by mass
· Carbon black 25 parts by mass (Niteron #GN, available from Shinnikka Carbon Co. Ltd. N₂SA of 35 m²/g
· Zinc oxide (Zinc Oxide III, available from Seido Chemical Industry Co., Ltd.): 3 parts by mass
· Sulfur (SULFAX 5, available from Tsurumi Chemical Industry Co., Ltd.): 3 parts by mass
· Vulcanization accelerator (DM-PO, available from OUCHI SHINKO CHEMICAL INDUSTRIAL CO., LTD.): 2 parts by mass

### · Preparation of test sample

### ·· Application step

Each of the adhesive compositions produced as described above was applied to the vulcanized rubber 1 (application amount: from 2 to 5 g/cm²), and bonded to the vulcanized rubber 2 to obtain a laminate.

### ·· Curing step

Each laminate obtained as described above was aged under conditions of 25°C and 50% relative humidity for 10 minutes to obtain a test sample having an adhesive layer (thickness: 1 mm) of the adhesive composition between vulcanized rubbers 1 and 2.

### · Tensile test

Each test sample obtained as described above was used to measure the peel adhesive strength under the conditions of 25°C and a tensile speed of 50 mm/min in accordance with JIS K6854-3:1999 (Adhesive-Determination of peel adhesive strength of bonded assemblies-Part 3: T-peel test).

### · Evaluation criteria

From the peel adhesive strength measured as described above, adhesiveness was evaluated according to the following criteria.

In the present invention, in a case where the peel adhesive strength was 8 N/m or more, the adhesiveness was evaluated as acceptable.

Meanwhile, in a case where the peel adhesive strength was less than 8 N/m, the adhesiveness was evaluated as unacceptable.

The evaluation results of adhesiveness are as presented below.
· ⊚: 25 N/m or more
· ∘: 20 N/m or more and less than 25 N/m
· △: 8 N/m or more and less than 20 N/m

- ×: less than 8 N/m

Practically, the adhesiveness is preferably ⊚, ∘, or △, more preferably ⊚ or ∘, and even more preferably ⊚.

### [Tensile Elastic Modulus of Cured Product]

### · Measurement method

The adhesive compositions produced as described above were cured for 24 hours under the conditions of 25°C and 60% relative humidity to prepare cured products.

Each of the prepared cured products was cut out into a dumbbell shape (No. 3 dumbbell shape) having a thickness of 2 mm and used as a test piece.

For the obtained test piece, the tensile elastic modulus (Pa) was measured by performing a test at a tensile speed of each cured product of 50 mm/min at 25°C in accordance with JIS K 6251:2017.

### · Evaluation criteria

The tensile elastic modulus measured as described above is preferably from 1.0 × 10⁵ to 900 × 10⁵ Pa from the viewpoint of more excellent adhesiveness, and the tensile elastic modulus is more preferably smaller in the range described above.

**[Table 1-1]**

| Table 1 (Two-part type adhesive composition) | | | Comparative Example | Example | Example | Example | Comparative Example | Example |
|---|---|---|---|---|---|---|---|---|
| | | | 1 | 1 | 2 | 3 | 2 | 4 |
| A | Organic polymer 1 | Kaneka Silyl MA490 | 45 | 60 | 80 | 95 | 98 | |
| | Organic polymer 2 | Kaneka Silyl S400 | | | | | | 50 |
| | Silane coupling agent 1 | Aminopropyltrimethoxysilane | 3 | 3 | 3 | 3 | 3 | 1.5 |
| | Tertiary amine | DMP30 | 1 | 1 | 1 | 1 | 1 | 5 |
| | Filler 1 | Heavy calcium carbonate, Super S | 5 | 5 | 5 | 5 | 5 | 5 |
| | Filler 2 | Surface-treated calcium carbonate, Calfine 200 | 35 | 35 | 35 | 35 | 35 | 35 |
| Agent B | Organotin catalyst | Dibutyltin dilaurate | 0.2 | 0.2 | 0.2 | 0.2 | 0.2 | 0.05 |
| | Epoxy resin 1 | Epikote 828 | 55 | 40 | 20 | 5 | 2 | |
| | Epoxy resin 2 | Epikote 807 | | | | | | 50 |
| | (Comparison) Epoxidized vegetable oil | | | | | | | |
| | Water | | 0.5 | 0.5 | 0.5 | 0.5 | 0.5 | 0.5 |
| | Filler 3 | Heavy calcium carbonate, Super S | 0.5 | 0.5 | 0.5 | 0.5 | 0.5 | 1 |
| | Filler 4 | Surface-treated calcium carbonate, Calfine 200 | 1 | 1 | 1 | 1 | 1 | 10 |
| Adhesiveness (adhesion between tire inner surface IL and vulcanized rubber part) | | | × | ○ | ○ | ⊚ | × | ○ |
| Tensile elastic modulus of cured product (× 10⁵ Pa @ 25°C) | | | 1200 | 550 | 100 | 2 | 0.5 | 770 |

**[Table 1-2]**

| Table 1 (Two-part type adhesive composition) | | | Example | Comparative Example | Example | Comparative Example | Comparative Example | Comparative Example | Example |
|---|---|---|---|---|---|---|---|---|---|
| | | | 5 | 3 | 6 | 4 | 5 | 6 | 7 |
| A | Organic polymer 1 | Kaneka Silyl MA490 | | 95 | 95 | 45 | 100 | 95 | 95 |
| | Organic polymer 2 | Kaneka Silyl S400 | 95 | | | | | | |
| | Silane coupling agent 1 | Aminopropyltrimethoxysilane | 3 | 0.05 | 2 | 0.05 | 25 | 3 | 3 |
| | Tertiary amine | DMP30 | 1 | 1 | 1 | 5 | 0 | 1 | 1 |
| | Filler 1 | Heavy calcium carbonate, Super S | 5 | 5 | 5 | 5 | 5 | 5 | 5 |
| | Filler 2 | Surface-treated calcium carbonate, Calfine 200 | 35 | 35 | 35 | 35 | 35 | 35 | 35 |
| Agent B | Organotin catalyst | Dibutyltin dilaurate | 0.2 | 0.2 | 0.2 | 0.05 | 1 | 0.2 | 0.2 |
| | Epoxy resin 1 | Epikote 828 | 5 | 5 | 5 | 55 | 0 | | |
| | Epoxy resin 2 | Epikote 807 | | | | | | 0 | 5 |
| | (Comparison) Epoxidized vegetable oil | | | | | | | 5 | |
| | Water | | 0.5 | 0.5 | 0.5 | 0.3 | 0.5 | 0.5 | 0.5 |
| | Filler 3 | Heavy calcium carbonate, Super S | 0.5 | 0.5 | 0.5 | 1 | 0 | 0.5 | 0.5 |
| | Filler 4 | Surface-treated calcium carbonate, Calfine 200 | 1 | 1 | 1 | 10 | 0 | 1 | 1 |
| Adhesiveness (adhesion between tire inner surface IL and vulcanized rubber part) | | | ○ | × | ○ | × | × | × | ○ |
| Tensile elastic modulus of cured product (× 10⁵ Pa @ 25°C) | | | 90 | 0.2 | 5.5 | 1050 | 0.2 | 0.4 | 3 |

**[Table 2-1]**

| Table 2 (One-part type adhesive composition) | | Comparative Example | Example | Example | Example | Comparative Example | Example |
|---|---|---|---|---|---|---|---|
| | | 1 | 1 | 2 | 3 | 2 | 4 |
| Organic polymer 1 | Kaneka Silyl MA490 | 45 | 60 | 80 | 95 | 98 | |
| Organic polymer 2 | Kaneka Silyl S400 | | | | | | 80 |
| Silane coupling agent 2 | Trimethoxysilyldimethyl butylidenepropylamine | 8 | 8 | 8 | 8 | 8 | 8 |
| Organotin catalyst | Dibutyltin laurate | 0.15 | 0.15 | 0.15 | 0.15 | 0.15 | 0.15 |
| Epoxy resin 1 | Epikote 828 | 55 | 40 | 20 | 5 | 2 | 20 |
| Epoxy resin 2 | Epikote 807 | | | | | | |
| (Comparison) Epoxidized vegetable oil | | | | | | | |
| Water | | | | | | | |
| Filler 1 | Heavy calcium carbonate, Super S | 5 | 5 | 5 | 5 | 5 | 5 |
| Filler 2 | Surface-treated calcium carbonate, Calfine 200 | 35 | 35 | 35 | 35 | 35 | 35 |
| Adhesiveness (adhesion between tire inner surface IL and vulcanized rubber part) | | × | ○ | ○ | ○ | × | ○ |
| Tensile elastic modulus of cured product (x 10⁵ Pa @ 25°C) | | 1100 | 20 | 12 | 5 | 0.5 | 10 |

**[Table 2-2]**

| Table 2 (One-part type adhesive composition) | | Comparative Example | Example | Comparative Example | Example | Example | Example |
|---|---|---|---|---|---|---|---|
| | | 3 | 5 | 4 | 7 | 8 | 9 |
| Organic polymer 1 | Kaneka Silyl MA490 | 80 | 80 | 80 | 80 | 80 | 80 |
| Organic polymer 2 | Kaneka Silyl S400 | | | | | | |
| Silane coupling agent 2 | Trimethoxysilyldimethyl butylidenepropylamine | 12 | 6 | 8 | 8 | 8 | 8 |
| Organotin catalyst | Dibutyltin laurate | 0.2 | 0.2 | 0.2 | 0.2 | 0.15 | 0.15 |
| Epoxy resin 1 | Epikote 828 | 20 | 20 | 0 | | 20 | 20 |
| Epoxy resin 2 | Epikote 807 | | | 0 | 20 | | |
| (Comparison) Epoxidized vegetable oil | | | | 20 | | | |
| Water | | | | | | | 0.9 |
| Filler 1 | Heavy calcium carbonate, Super S | 5 | 5 | 5 | 5 | 5 | 5 |
| Filler 2 | Surface-treated calcium carbonate, Calfine 200 | 35 | 35 | 35 | 35 | 60 | 35 |
| Adhesiveness (adhesion between tire inner surface IL and vulcanized rubber part) | | × | ○ | × | ○ | ○ | ○ |
| Tensile elastic modulus of cured product (x 10⁵ Pa @ 25°C) | | 1000 | 14 | 0.5 | 11 | 12 | 14 |

Details of the components indicated in Table 1 are as follows. The same applies to Table. 2.

### ((Agent A))

### (Organic Polymer)

· Organic polymer 1: Silyl MA490 available from Kaneka Corporation. Poly (meth)acrylates having a trimethoxysilyl group at the terminal. The number of alkoxysilyl groups in one molecule is 2.5 on average.
· Organic polymer 2: Silyl S400 available from Kaneka Corporation. Poly (meth)acrylates having a trimethoxysilyl group at the terminal. The number of alkoxysilyl groups in one molecule is 3 on average.

### (Silane coupling agent)

· Silane coupling agent 1: 3-aminopropyltrimethoxysilane KBM-903, available from Shin-Etsu Chemical Co., Ltd.

   [Chemical Formula 1] (CH₃O)₃SiC₃H₆NH₂
· Silane coupling agent 2: 3-triethoxysilyl-N-(1,3-dimethylbutylidene)propylamine KBE-9103P, available from Shin-Etsu Chemical Co., Ltd. 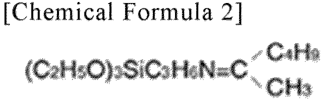
· Tertiary amine: 2,4,6-tris(dimethylaminomethyl)phenol. DMP30, available from Wako Pure Chemical Industries, Ltd. 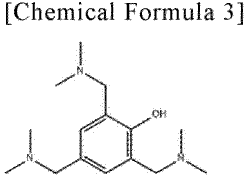
· Fillers 1 and 3: Heavy calcium carbonate Super S, available from Maruo Calcium Co., Ltd.
· Fillers 2 and 4: Surface-treated calcium carbonate. Calfine 200 available from Maruo Calcium Co., Ltd.
· Organotin catalyst: Dibutyltin dilaurate, available from Tokyo Chemical Industry Co., Ltd.

### (Epoxy resin)

· Epoxy resin 1: Bis A type epoxy resin. Epikote 828, available from JER. Weight average molecular weight 380, epoxy equivalent 190 g/eq
· Epoxy resin 2: Bis F type epoxy resin. Epikote 807, available from JER. Weight average molecular weight 367, epoxy equivalents 183 g/eq.
· (Comparison) Epoxidized vegetable oil: Epoxidized soybean oil, available from Wako Pure Chemical Industries, Ltd. It has no aromatic hydrocarbon group.

### · Water: Distilled water

As clarified from the results presented in each Table, the adhesive composition according to an embodiment of the present invention had excellent adhesiveness.

Meanwhile, in Comparative Examples 1, 2, and 4 in Table 1 and Comparative Examples 1 and 2 in Table 2 in which the mass ratio (R:E) was out of the range of from 95:5 to 50:50, the adhesiveness was poor.

In Comparative Examples 3 and 4 in Table 1 in which the content S of the silane coupling agent was less than 1.5 parts by mass, the adhesiveness was poor.

In Comparative Example 3 in Table 2 in which the content S of the silane coupling agent exceeded 10 parts by mass, the adhesiveness was poor.

In Comparative Example 5 in Table 1 in which no epoxy resin having an aromatic hydrocarbon group was contained, the adhesiveness was poor.

In Comparative Example 6 in Table 1 and Comparative Example 4 in Table 2 in which an epoxy resin not having an aromatic hydrocarbon group was contained in place of the epoxy resin having an aromatic hydrocarbon group, the adhesiveness was poor.

## Claims

1. An adhesive composition for vulcanized rubber, comprising:
an organic polymer having an alkoxysilyl group;
an epoxy resin having an aromatic hydrocarbon group; and
a silane coupling agent;
a mass ratio (R:E) between a content R of the organic polymer and a content E of the epoxy resin being from 95:5 to 50:50, and
a content S of the silane coupling agent being from 1.5 to 10 parts by mass per 100 parts by mass of a total of the content R and the content E.

2. The adhesive composition for vulcanized rubber according to claim 1, wherein a cured product has a tensile elastic modulus of from 1.0 × 10⁵ to 900 × 10⁵ Pa under a condition of 25°C.

3. The adhesive composition for vulcanized rubber according to claim 1 or 2, wherein the epoxy resin comprises a bisphenol A type epoxy resin and/or a bisphenol F type epoxy resin.

4. The adhesive composition for vulcanized rubber according to any one of claims 1 to 3, further comprising an organotin catalyst.

5. The adhesive composition for vulcanized rubber according to any one of claims 1 to 4, further comprising water.

6. The adhesive composition for vulcanized rubber according to any one of claims 1 to 5, further comprising a tertiary amine.

7. The adhesive composition for vulcanized rubber according to any one of claims 1 to 6, further comprising
a filler, a content F of the filler being from 10 to 120 parts by mass per 100 parts by mass of the total of the content R and the content E.

8. The adhesive composition for vulcanized rubber according to any one of claims 1 to 7, wherein a main backbone of the organic polymer has a repeating unit derived from a (meth)acrylate-based monomer and/or an alkylene oxide unit.

9. A one-part type adhesive composition for vulcanized rubber, comprising: an organic polymer having an alkoxysilyl group; an epoxy resin having an aromatic hydrocarbon group; a silane coupling agent; and an organotin catalyst;
a mass ratio (R1:E1) between a content R1 of the organic polymer and a content E1 of the epoxy resin being from 95:5 to 50:50, and
a content S1 of the silane coupling agent being from 3.0 to 10 parts by mass per 100 parts by mass of a total of the content R1 and the content E1.

10. A two-part type adhesive composition for vulcanized rubber, being a two-part type comprising an agent A and an agent B,
the agent A comprising: an organic polymer having an alkoxysilyl group; a tertiary amine; and a silane coupling agent,
the agent B comprising: an epoxy resin having an aromatic hydrocarbon group; an organotin catalyst; and water,
a mass ratio (R2:E2) between a content R2 of the organic polymer and a content E2 of the epoxy resin being from 95:5 to 50:50, and
a content S2 of the silane coupling agent being from 1.5 to 3.5 parts by mass per 100 parts by mass of a total of the content R2 and the content E2.

11. A tire comprising a vulcanized tire and a part, the vulcanized rubber and the part being bonded to each other with an adhesive composition for vulcanized rubber according to any one of claims 1 to 10.

12. The tire according to claim 11, wherein the part is a rubber container comprising a sensor.
